# EUROPEAN PATENT APPLICATION

(11) **EP 4 414 963 A1**
(43) Date of publication of application: **14.08.2024**
(21) Application number: 24150375.4
(22) Date of filing: 04.01.2024
(51) Int. Cl.: G08G 1/09, G08G 1/095, G08G 1/0967, H04B 10/116, H04W 4/44

(54) **METHOD, DRIVER ASSISTANCE SYSTEM FOR WIRELESS COMMUNICATION BETWEEN A VEHICLE AND A TRAFFIC INFRASTRUCTURE AND SYSTEM FOR CONTROLLING THE TRAFFIC FLOW**

(30) Priority: 06.02.2023 IN 202311007490
(71) Applicant: ZF CV Systems Global GmbH, 3006 Bern (CH)
(72) Inventor: MUTHUPALANIAPPAN, Muthupalaniappan, 88048 Friedrichshafen (DE)
(74) Representative: Schäferjohann, Volker

(57) **Abstract**

The invention relates to a method for wireless communication between a vehicle (4) and a traffic infrastructure, in which information is output by optical means (2). The wireless communication takes place via a digital optical data transmission path (3) in the visible range of light.

## Description

The invention relates to a method for wireless communication between a vehicle and a traffic infrastructure, in which information is output by optical means, a driver assistance system for a vehicle, comprising a control unit for setting an assistance function control signal for a functional unit of the vehicle and a system for controlling a traffic flow of vehicles in road traffic, comprising permanently installed roadside devices for optical output of information which are detectable by the vehicles.

There are speed assistance systems (ISA-Intelligent speed assistance system) for vehicles known, which ensure that a speed of the vehicle does not exceed a predetermined value. In the event of a possible speed exceeding, the driver is warned, or the speed of the vehicle is automatically reduced. To recognize a corresponding traffic sign, the speed assistance system uses a camera perceived speed sign information and also the GPS-data consisting speed sign information present in a specific route the vehicle is travelling. In "LiFi is a paradigm-shifting 5G technology" review in Physics 3 (2018) 26-31, Light-Fidelity (LiFi) technology is described as wireless communication technology that can be used in the infrared and visible light spectrum for fast data communication.

The article "6G for Vehicle-to-Everything (V2X) Communications: Enabling Technologies, Challenges and Opportunities" arXiv: 2012.07753v1 [cs.IT] 14 Dec. 2020 reveals the use of LiFi technology for V2X communication.

The object of the invention is to provide a method, a driver assistance system and a system for controlling a traffic flow, which enables fast wireless data exchange between vehicles and a traffic infrastructure by simple means.

This object is achieved by a method according to claim 1. Accordingly, the method for wireless communication between a vehicle and a traffic infrastructure, in which information is output by optical means comprises that the wireless communication takes place via a digital optical data transmission path in the visible range of light.

The object is also achieved by a driver assistance system for a vehicle, comprising a control unit for setting an assistance function control signal for a functional unit of the vehicle. The control unit is connected to a receiver module which is designed such that it receives an optical modulated signal which is output from a traffic infrastructure in the visible range of light over a digital optical data transmission path and converts the received optical modulated signal into a digital code word signal for further evaluation.

The object is further achieved by system for controlling a traffic flow of motor vehicles in road traffic, comprising permanently installed roadside devices for optical output of information which are detectable by the vehicles. The roadside permanently installed devices are designed as lighting units such that they in a visible range of light via an optical data transmission path transmit the information comprising an optical modulated signal to the vehicle, which detects this optical modulated signal by a receiver module located on the vehicle and converts it into a digital code word from which the information is derived and used to control the vehicle.

In all applications, LiFi module is installed in a roadside infrastructure. This roadside infrastructure can be, for example, a pole with an LED light source or a streetlamp or traffic light that can serve as a source for transmitting LiFi signals. Due to the fixed installation of the sources for LiFi signals in the traffic infrastructure, sensor dependencies and their placement on the vehicle as well as the dependence on the quality of a GPS signal and the weather are eliminated. The vehicles only have to enter the detection area of the LiFi source. Since the vehicles only need one receiver for the LiFi signals and a corresponding evaluation unit, the technical equipment expenditure on the vehicle is reduced, which reduces costs. The reliability of the optically modulated signal is thus increased.

In one preferred embodiment the optical modulated signal is a pulse-coded modulated light signal, in particular a pulse-position modulation technique.

In particular, the light signal emitted via the digital optical data transmission path is binary encoded. The binary coding allows the receiver module of the light signal a reliable evaluation. Binary coding is easy to implement as the lighting unit only needs to be switched off or on at specific time intervals.

The optically modulated signal, which is emitted by the source of the LiFi signal, can correspond to a traffic sign, which is transmitted in optically modulated form to the vehicle and evaluated in it. Digital code words for different traffic signs can be stored in each LiFi source, so that different traffic signs can be transmitted one after the other. For example, a traffic sign indicating a speed limit can be replaced by a traffic sign indicating a traffic jam, if the local traffic situation it requires.

In a further embodiment, the digital code words for various traffic signs are managed in a central traffic management system and the relevant digital code words characterizing a traffic sign are transmitted wirelessly targeted to the specified lighting unit, which converts the digital code word into a pulse-code modulated signal for controlling the lighting unit by means of a light control module. By managing the codes for the different traffic signs in a central database of the traffic management system, it is possible to react dynamically to changing traffic conditions and to adapt the traffic signs in a large area to the current traffic situation.

In a preferred embodiment the traffic sign to be coded is a speed limit. By changing a speed limit, which is detected by the vehicle approaching, the traffic flow can be reliably controlled at different traffic volumes, which can prevent traffic jams.

A particularly simple method comprises that the pulse-code signal received by the vehicle via the optical data transmission path in the vehicle for recognizing the traffic sign is evaluated and the driving behavior of the vehicle is automatically adapted to the specification of the traffic sign. A particular advantage is that the speed limit detected in the vehicle is automatically implemented in the vehicle and the vehicle speed is adapted to the displayed speed limit without driver intervention.

Another aspect of the invention relates to a driver assistance system for a vehicle, comprising a control unit for setting an assistance function control signal for a functional unit of the vehicle. The control unit is connected to a receiver module which is designed such that it receives an optical modulated signal which is output from a traffic infrastructure in the visible range of light over a digital optical data transmission path and converts the received optical modulated signal into a digital code word for further evaluation. The optical modulated signal is output by the LiFi unit permanently installed on the roadside infrastructure. With the help of the receiver unit, the driver assistance system recognizes a traffic sign transmitted by the LiFi signal when entering the transmission range of the LiFi unit. When using the LiFi receiver in an intelligent speed assistance system called ISA system, a speed limit can be implemented with little hardware effort.

With the auxiliary function control signal or several assistance function control signals, the driver assistance system controls other components of the vehicle in order to implement the assistance function, such as traffic sign recognition. The other components may be included in the driver assistance system or be equipped with regard to the system architecture of the vehicle with separate and / or independent modules, such as an engine control unit.

The aspects described here with reference to the method apply equally to the disclosed driver assistance system, which can be carried out, for example, by a central control unit. This can be done by making suitable write and read accesses to a memory assigned to the vehicle, in which, for example, the currently recognized traffic signs are stored. The hardware of the driver assistance system includes in particular digital signal processors, application-specific integrated circuits, field programmable gate arrays and other suitable switching and computing components.

In a further embodiment the lighting units comprise a light control module which is designed to convert a digital code word characterizing a traffic sign into a control signal for the lighting unit for the output of the optical modulated signal. The constructive effort for the formation of the system is therefore limited, since a correspondingly programmed microprocessor can be used as a lighting control module.

Especially, if the light control module of the lighting unit is wirelessly coupled to a central traffic management system for transmitting a digital code word corresponding to the traffic sign a lot of different traffic signs can be transmit to the lighting unit by sending different optical modulated signals to the vehicles.

This system allows comprehensive coverage of an area by dynamically changing traffic signs recognized by passing vehicles. For example, the announcement and marking of construction sites can be largely dispensed with, since only by changing the optically modulated signal emitted by the LiFi unit, the traffic sign for a construction site is transmitted to the vehicle without having to set up individual traffic signs at the roadside. After completion of the construction site, this optically modulated signal only needs to be deleted or replaced by an optically modulated signal representing another traffic sign.

Further features, advantages and properties of the invention are explained by the description of preferred embodiments of the invention with reference to the figures showing:
- Fig. 1: a schematic representation of a first embodiment of the system according to the invention,
- Fig. 2: a schematic representation of an embodiment of the driver assistance system according to the invention,
- Fig. 3: a schematic representation of a second embodiment of the system according to the invention.

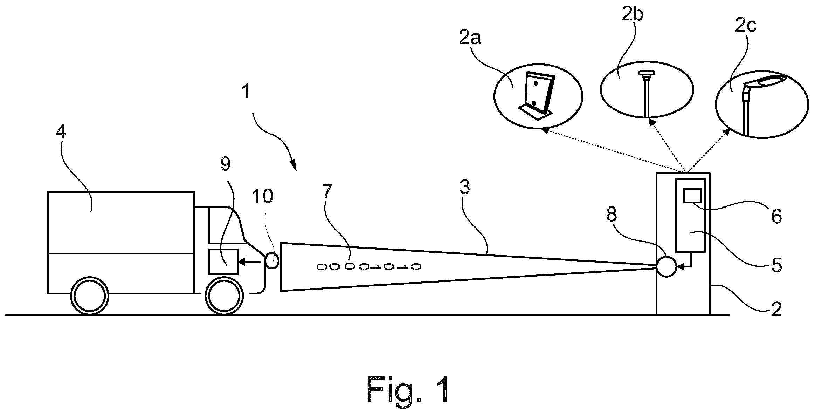

A system 1 according to the invention for controlling a traffic flow of motor vehicles in road traffic is shown in Fig. 1. Along the roadside, lighting units 2 for the optical output of information via a digital optical data transmission path 3 are permanently installed at predetermined intervals, which are detected by passing vehicles 4 entering the area of the data transmission path 3. As such lighting units 2 can be used, for example, existing on the roadside guardrails 2a, lampposts 2b or streetlamps 2c. Each lighting unit 2 comprises a lighting control module 5 in which a memory 6 is arranged. In the memory 6, various digital code words 19 are stored, each representing a predetermined traffic sign. To output a desired traffic sign, the corresponding code word is read out by the light control module 5 from the memory 6. The light control module 5 controls the lighting device 2 so that the digital code word 19 is output as an optically modulated light signal 7 from an LED 8 of the lighting device 2 in the visible region of the spectrum to the environment.

Advantageously, the optically modulated light signal 7 represents a binary signal. To emit the binary signal, LED 8 must be switched on and off at specified intervals.

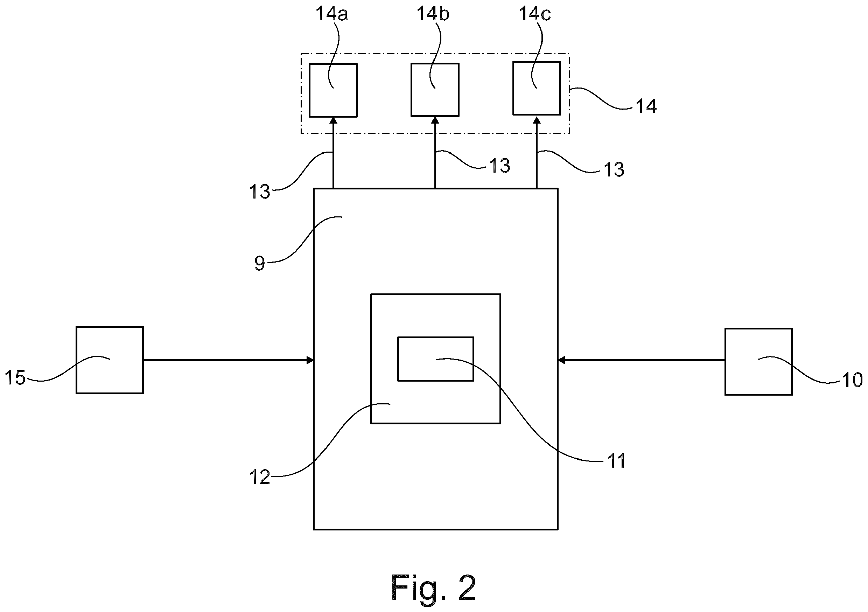

These optically modulated signals 7 are received by the vehicles 4, which enter the radiation range of the lighting units 2. In order to be able to evaluate the optically modulated signals, the vehicle 4 comprises a driver assistance system 9, as shown in Fig. 2. The driver assistance system 9 comprises a receiver module 10 designed as a photoelement for receiving the optically modulated signal 7. The receiver module 10 converts the optically modulated signal 7 into an adequate digital code word. This digital code word is fed to a decoding module 11, which assigns it to a corresponding traffic sign. Depending on the recognized traffic sign, a control unit 12 comprising the decoding module 11 generates an assistance function control signal 13, which controls a vehicle operating unit 14 to adapt the driving behavior of the vehicle 4 to the traffic sign. At least one vehicle sensor 15 measures the current driving characteristics like vehicle velocity.

The traffic sign transmitted by optical modulation can, for example, be a speed limit sign. A speed limit of 80 km/h can be encoded as a binary signal 0101 0000. In order to set this speed limit automatically in the vehicle 4, the control unit 12 of the driver assistance system 9 evaluates the current vehicle speed measured by vehicle sensors 15. Depending on whether the current vehicle speed is greater or less than the specified 80 km/h, the assistance function control signal is output either to a braking system 14a or an engine control system 14b of the vehicle 4, each of which forms a vehicle operating unit 14. Alternatively, a display 14c can indicate a warning signal to the driver, which then manually acts on the vehicle operating unit 14a, 14b to adjust the speed limit.

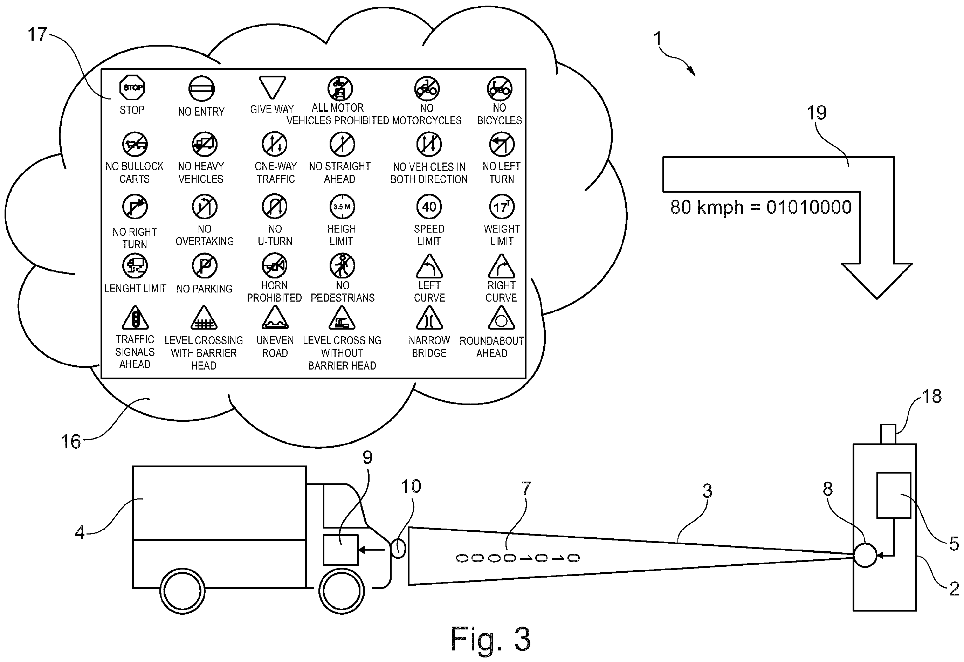

Depending on the current volume of traffic and / or weather conditions and / or construction sites, in the area of the lighting unit 2 the speed limit can be dynamically adjusted with the aid of a central traffic management system 16, as shown in Fig. 3. The speed limit can be reduced, for example to 50 km/h. For this purpose, a modulated light signal 7 with another binary coding, for example 0011 0010, is output from the lighting unit 2.

The central traffic management system 16 monitoring the traffic situation manages a plurality of traffic signs in a database 17, wherein each traffic sign is assigned a specific digital code word 19. Depending on the traffic situation, a traffic sign is selected, the digital code word 19 of which is sent wirelessly, preferably by radio, to the relevant lighting unit 2. A radio receiver 18 of the lighting unit 2 is coupled to the light control module 5, which controls the lighting unit 2 depending on the received digital code word 19 to output a corresponding optically modulated light signal 7. The evaluation of the optically modulated light signal 7 received by the vehicle 4 is carried out in vehicle 4 in the manner described in connection with Fig. 2.

### Reference signs

- 1: system
- 2: lighting unit
- 2a: guardrails
- 2b: lamppost
- 2c: streetlight
- 3: digital optical data transmission path
- 4: vehicle
- 5: light-control module
- 6: memory
- 7: optically modulated light signal
- 8: LED
- 9: driver assistance system
- 10: receiver module
- 11: decoding module
- 12: control unit
- 13: assistance function control signal
- 14: vehicle operating unit
- 14a: brake system
- 14b: engine control unit
- 14c: display
- 15: vehicle sensor
- 16: central vehicle management system
- 17: database for traffic signs
- 18: radio receivers
- 19: digital code word for traffic signs

## Claims

1. Method for wireless communication between a vehicle (4) and a traffic infrastructure, in which information is output by optical means (2), **characterized in that** the wireless communication takes place via a digital optical data transmission path (3) in the visible range of light.

2. Method according to claim 1, **characterized in that** via the digital optical data transmission path (3), a modulated optical signal (7) representing a traffic sign is transmitted as pulse-code modulated signal to the vehicle (4) entering the transmission path (3).

3. Method according to claim 1 or 2, **characterized in that** the optical modulated signal (7) representing the traffic sign is output from a roadside permanently installed lighting unit (2) of the traffic infrastructure as a pulse-code modulated signal.

4. Method according to claim 1, 2 or 3, **characterized in that** a plurality of digital code words (19) for traffic signs are stored in a light control module (5) of the lighting unit (2).

5. A method according to claim 1 or 2 **characterized in that** digital code words (19) for various traffic signs are managed in a central traffic management system (16) and the relevant digital code word characterizing a traffic sign is transmitted wirelessly targeted to the specified lighting unit (2), which converts the digital code words (19) into a pulse-code modulated signal for controlling the lighting unit (2) by means of a light control module (5).

6. Method according to at least one of the preceding claims, **characterized in that** the traffic sign to be transmitted is dynamically adapted depending on a traffic situation.

7. Method according to at least one of the preceding claims, **characterized in that** as a traffic sign to be coded a speed limit is used.

8. Method according to at least one of the preceding claims **characterized in that** the pulse-code signal received by the vehicle (4) via the optical data transmission path (3) for recognizing the traffic sign is evaluated and the driving behavior of the vehicle (4) is automatically adapted to the specification of the traffic sign.

9. Driver assistance system (9) for a vehicle, comprising a control unit (12) for setting an assistance function control signal (13) for a functional unit (14) of the vehicle (4), **characterized in that** the control unit (12) is connected to a receiver module (10) which is designed such that it receives an optical modulated signal (7) which is output from a traffic infrastructure component (2) in the visible range of light over a digital optical data transmission path (3) and converts the received optical modulated signal (7) into an digital code word (19) for further evaluation.

10. Driver assistance system (9) according to claim 9, **characterized in that** the receiver module (10), when entering the transmission range from a roadside permanently installed lighting unit (2) starts monitoring the optical data transmission path (3) for receiving the pulse-code modulated optical signal (7) output from the lighting unit (2).

11. Driver assistance system (9) according to claim 9 or 10, **characterized in that** the control unit (12) comprises a recognition unit (11) which is designed in such a way that it retrieves a traffic sign **characterized by** the optical modulated signal (7) and derives the assistance function control signal (13) for adapting the driving behavior of the vehicle (4) to the traffic sign.

12. Driver assistance system (9) according to claim 9 or 10, **characterized in that** the receiver module (10) comprises a photoelement for detecting the transmitted optical modulated signal (7) and for conversion into a digital code word (19), which is entered into the recognition unit (11) of the control unit (12).

13. Driver assistance system (9) according to any one of the preceding claims 9 to 12, **characterized in that** the recognition unit (11) recognizes the traffic sign **characterized by** the optical modulated signal (7) as a speed limit and provides the assistance function control signal (13) for a drive or brake functional unit (14a, 14b) of the vehicle (4) to adapt the driving behavior of the vehicle (4) to the recognized traffic sign and/or for a display (14c) as dashboard warning for the driver, whereby the current driving characteristics is measured by at least one vehicle sensor (15).

14. System for controlling a traffic flow of vehicles in road traffic, comprising permanently installed roadside devices (2) for optical output of information which are detectable by the vehicles (4), **characterized in that** the roadside permanently installed devices are designed as lighting units (2) such that they in a visible range of light via an optical data transmission path (3) the information comprising an optical modulated signal (7) sends to the vehicle, which detects this optical modulated signal (7) by a receiver module (10) located on the vehicle (4) and converts it into an digital code word (19) from which the information is derived and used to control the vehicle (4).

15. System according to claim 14, **characterized in that** the lighting units (2) comprise a light control module (5) which is designed to convert a digital code word (19) characterizing a traffic sign into a control signal for the lighting unit (2) for the output of the optical modulated signal (7).

16. System according to claim 14 or 15, **characterized in that** the light control module (5) of the lighting unit (2) is wirelessly coupled to a central traffic management system (16) for transmitting a digital code word (19) corresponding to the traffic sign.
